# EUROPEAN PATENT SPECIFICATION

(11) **EP 3 575 188 B1**
(45) Date of publication and mention of the grant of the patent: **13.07.2022**
(21) Application number: 19177296.1
(22) Date of filing: 29.05.2019
(51) Int. Cl.: B62D 21/14, B62D 21/20

(54) **LENGTH ADJUSTMENT TRAILER**
ANHÄNGER MIT LÄNGENANPASSUNG
REMORQUE À RÉGLAGE DE LONGUEUR

(30) Priority: 29.05.2018 NL 2021008
(43) Date of publication of application: 04.12.2019
(73) Proprietor: Broshuis B.V., 8263 AD Kampen (NL)
(72) Inventor: Broshuis, Balthasar Johannes Petrus, 8363 AD Kampen (NL)
(74) Representative: V.O.

(56) References cited:
- EP-A1- 2 927 049
- DE-U1-202012 010 545
- US-A- 5 465 990
- US-A- 5 716 071

## Description

### FIELD

The invention relates to a trailer with length-adjustable chassis, as well as a method for adjusting in length a trailer with an extendible chassis.

### BACKGROUND

A trailer with a length-adjustable chassis is already known from GB 1,189,809. GB 1,189,809 shows an extendible chassis. The extendibility is provided by at least one extension assembly including a first and a second tubular profile which are telescopically slidable relative to each other in a length direction. The extension assembly includes a blocking mechanism for blocking the first and the second tubular profile relative to each other. The blocking mechanism comprises a blocking pin which is connected with the first tubular profile so as to be adjustable in an axial direction of the blocking pin, transversely to the length direction and is thereby movable between a locking position and a release position. The second tubular profile is provided with a series of holes which are provided at different length positions with respect to the second tubular profile. If a user of the trailer wants to change the length of the trailer, he needs to unlock the blocking mechanism by removing the pin against spring action from a hole of the second tubular profile. Next, he can pull the trailer with a tractive vehicle and thereby have the two tubular profiles slide relative to each other. The pin, under the influence of the spring action, then pops into a next hole of the second tubular profile. If the user does not want to have the pin locked in the first neighboring hole but in a next hole, he needs to come out of the cabin to unlock the blocking mechanism again and then pull the trailer with the tractive vehicle once again. GB 1,189,809 shows a trailer with two extension assemblies. After the first extension assembly has been set to the proper length in one or more steps, the user needs to carry out the same method for the second extension assembly. In most cases, therefore, before the user has set the trailer to a proper length, he needs to climb down from the cabin a number of times to unlock the locking mechanism.

Other examples of trailers with a length-adjustable chassis are known from EP 927 049 A1, DE 20 2012 010 545 U1 and US 5,465,990.

EP 927 049 A1 discloses a trailer comprising a central support tube or through and an inner support which are telescopically slidable relative to each other in a length direction. The central support is provided with a locking apparatus for a shape-fit connection with the inner support.

DE 20 2012 010 545 U1 also discloses an example a telescopic carrier provided with a braking or locking device with which telescopic carrier can be releasably locked with respect to the trailer.

US 5,465,990 discloses another example of a length adjustable chassis in a trailer, wherein the locking system is provided with pneumatic pins.

### SUMMARY

The object of the invention is to provide an extendible chassis trailer that can be simply and quickly adjusted in length.

To that end, the invention provides a trailer according to claim 1. More particularly, the invention provides a trailer comprising an extendible chassis. The extendibility is provided by at least one extension assembly including a first and a second tubular profile which are telescopically slidable relative to each other in a length direction. The extension assembly includes a blocking mechanism for blocking the first and the second tubular profile relative to each other. The blocking mechanism comprises a blocking pin which is connected with the first tubular profile in a manner adjustable in an axial direction of the blocking pin, transversely to the length direction and is thereby movable between a locking position and a release position. The second tubular profile is provided with a series of holes at different length positions with respect to a longitudinal central axis of the second tubular profile. Each hole of the series of holes in the second tubular profile has a unique hole shape orientation and/or has a unique transverse position with respect to the longitudinal central axis of the second tubular profile. A position and/or rotational orientation of the blocking pin with respect to the first tubular profile is adjustable in a direction transverse to the axial direction of the blocking pin, such that the blocking pin for each hole of the series of holes is bringable into a unique position and/or rotational orientation associated with that hole. The blocking pin in that respective unique position and/or rotational orientation is displaceable in axial direction to the locking position so that an end of the blocking pin can extend into the respective hole for blocking the telescopic slideability of the first tubular profile relative to the second tubular profile. The end of the blocking pin in that respective unique position and/or rotational orientation is not bringable into the other holes of the series of holes.

To adjust the trailer in length, the blocking pin needs to be brought out of a hole in the second tubular profile and, after the tubular profiles have been slid relative to each other, be brought into another hole. Before having reached the desired hole, the blocking pin, during the sliding of the tubular profiles, can pass one or several holes without being able to move into them. Through the combination of a unique hole shape orientation and/or a unique transverse position of the holes with a unique position and/or rotational orientation of the blocking pin, it is possible to select beforehand which hole the blocking pin is to move into. By setting the blocking pin in a unique position and/or rotational orientation, it is not possible anymore for it to move into any other, not desired, hole. The blocking pin will be able to move into a hole only when it has arrived at the hole that is associated with its unique position and/or rotational orientation. The blocking pin will therefore not be able to move into any other hole and thereby fix the trailer in a length not desired. The blocking pin, accordingly, does not need to be removed once more from any hole before the tubular profiles can be slid further on. There is no need to take the blocking pin from successive holes several times. It can suffice to bring the blocking pin in the release position once and set it in the desired unique position and/or rotational orientation associated with the hole corresponding with the desired length of the chassis.

The invention further provides a method for adjusting in length a trailer with an extendible chassis, according to claim 15. More particularly, the invention provides a method comprising providing a trailer according to the invention, providing a tractive vehicle coupled to the trailer, setting the blocking pin of the at least one extension assembly in a desired unique position and/or rotational orientation, and displacing the tractive vehicle until the blocking pin of each of the at least one extension assembly is in the locking position.

The advantage of the method is that a user of the trailer needs to set the trailer only once. He can put the blocking pin in the unique position and/or rotational orientation that corresponds to the length of the trailer desired by him. If the trailer comprises multiple extension assemblies, the user can set the blocking pins thereof in one go. By thereupon driving the tractive vehicle back and forth, the user slides the tubular profiles relative to each other, until the blocking pin or blocking pins is or are in the locking position. To that end, the user can, for example, secure one part of the trailer and move another part back and forth with the tractive vehicle. For securing the one part, for example, brakes of an undercarriage, if present, can be used. After the blocking pin or blocking pins is/are in the locking position, the trailer is ready for use and the user can drive off with the trailer.

Further elaborations of the invention are described in the subclaims and will be further clarified hereinafter on the basis of examples, with reference to the figures.

### BRIEF DESCRIPTION OF THE FIGURES

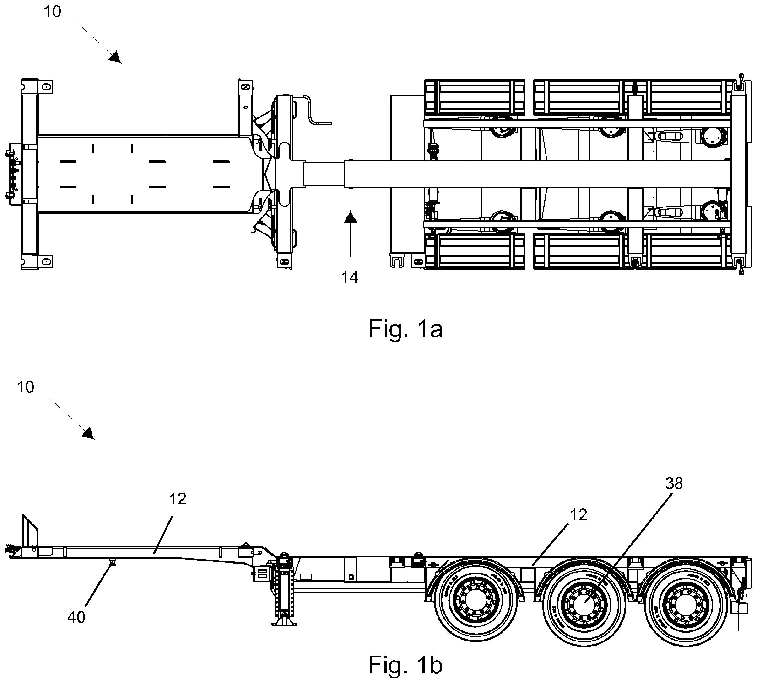

Figure 1a shows a top plan view of an example of the trailer according to the invention with the pin in a hole at a length position;
Figure 1b shows a side view of the example of Figure 1a;

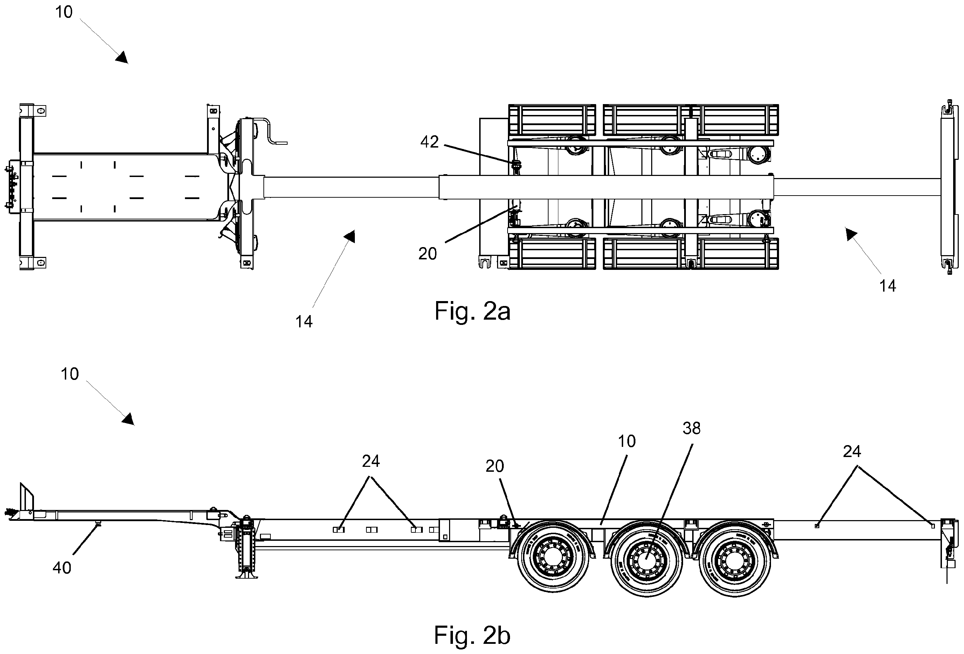

Figure 2a shows a top plan view of the example of Figure 1a with the pin in a hole at a different length position;
Figure 2b shows a side view of the example of Figure 2a;

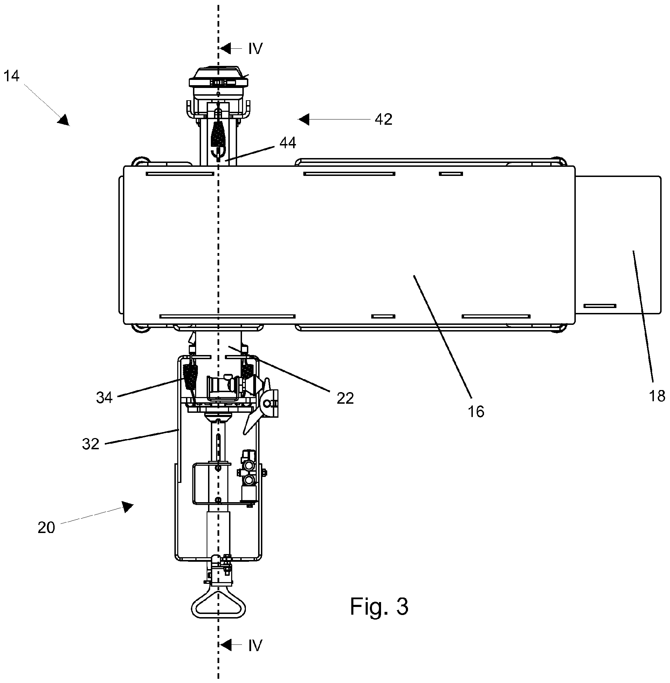

Figure 3 shows a top plan view of an example of the extension assembly according to the invention;

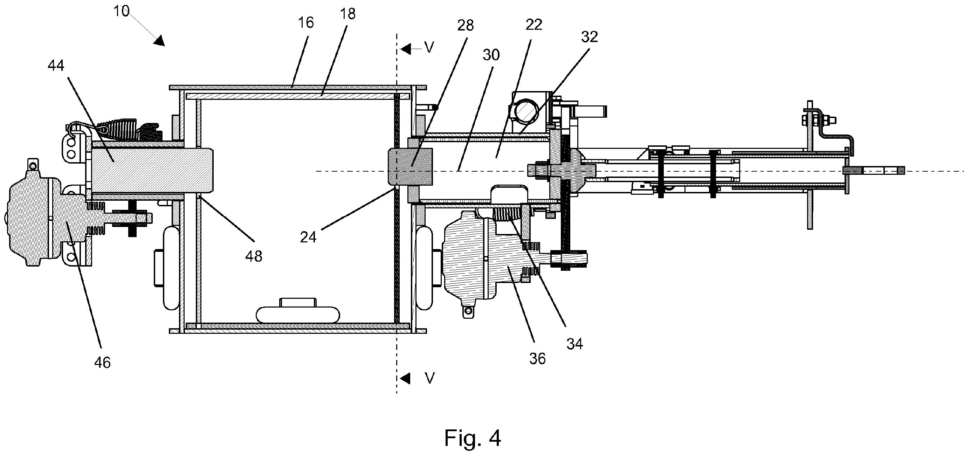

Figure 4 shows a cross section of the example of the extension assembly of Figure 3 along the line IV-IV in Figure 3;

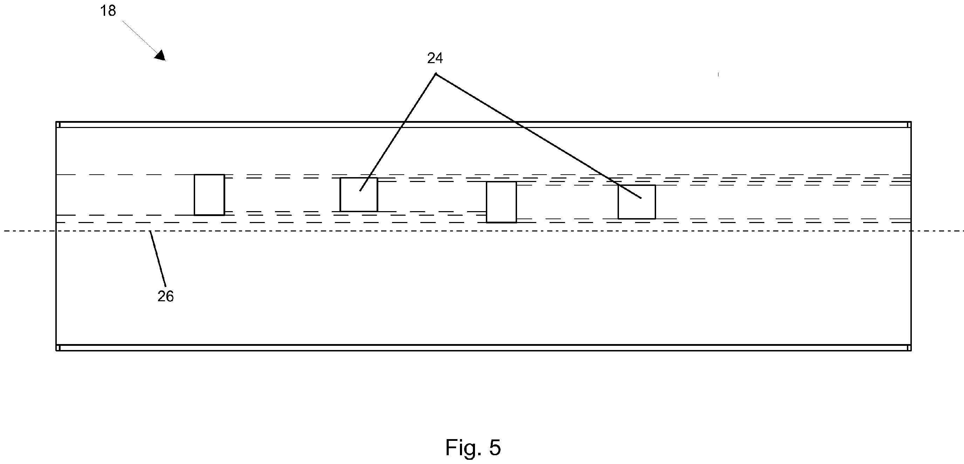

Figure 5 shows a side view of an example of the second tubular profile of the invention with the series of holes thereon;
Figure 6a shows a side view of an example of the blocking pin according to the invention;
Figure 6b shows a bottom view of the example of the blocking pin of Figure 6a;
Figure 6c shows a front view of the example of the blocking pin of Figure 6a.

### DETAILED DESCRIPTION

In the following detailed description, with the aid of reference numerals reference is made to the example that is represented in the figures. The embodiments that are described in the detailed description, however, are not limited to the example that is shown in the figures but may also be implemented in a different manner than shown in the example. The embodiments described in the detailed description should therefore be read and understood also without the reference numerals. The various embodiments to be described hereinafter can be applied in combination with each other or independently of each other.

Most generally, the invention provides a trailer 10, comprising an extendible chassis 12. The extendibility is provided by at least one extension assembly 14, including a first 16 and a second 18 tubular profile which are telescopically slidable relative to each other in a length direction. The extension assembly 14 includes a blocking mechanism 20 for blocking the first 16 and the second tubular profile 18 relative to each other. The blocking mechanism 20 comprises a blocking pin 22 which is connected with the first tubular profile 16 in a manner adjustable in an axial direction of the blocking pin 22, transversely to the length direction and is thus movable between a locking position and a release position. The second tubular profile 18 is provided with a series of holes 24 at different length positions with respect to a longitudinal central axis 26 of the second tubular profile 18. Each hole 24 of the series of holes 24 in the second tubular profile 18 has a unique hole shape orientation and/or has a unique transverse position with respect to the longitudinal central axis 26 of the second tubular profile 18. A position and/or rotational orientation of the blocking pin 22 with respect to the first tubular profile 16 is adjustable in a direction transverse to the axial direction of the blocking pin 22, such that the blocking pin 22, for each hole 24 of the series, is bringable into a unique position and/or rotational orientation associated with that hole 24. In such respective unique position and/or rotational orientation, the blocking pin 22 is displaceable in axial direction to the locking position so that an end 28 of the blocking pin 22 can extend into the respective hole 24 for blocking the telescopic slidability of the first tubular profile 16 relative to the second tubular profile 18. In such respective unique position and/or rotational orientation, the end 28 of the blocking pin 22 is not bringable into the other holes 24 of the series of holes 24.

The trailer 10 is adjustable in length, in that it is provided with two tubular profiles 16, 18 telescopically slidable relative to each other. It will be clear that the tubular profiles 16, 18 are not limited to profiles having a rectangular cross section, as shown in the example of the Figures. The cross section may also be, for example, round or hexagonal. Due to the second tubular profile 18 being provided with a series of holes 24 which the blocking pin 22 can extend into, the length of the trailer 10 is fixable in different lengths. To adjust the trailer 10 in length, the blocking pin 22 needs to be brought out of a hole 24 in the second tubular profile 18 and, after the tubular profiles 16, 18 have been slid relative to each other, be brought into another hole 24. Bringing the blocking pin 22 out of a hole 24 will typically be done by a driver of a tractive vehicle of the trailer 10. For this, he/she will generally have to leave the cabin of the tractive vehicle. Next, by moving the tractive vehicle, he/she can have the tubular profiles 16, 18 move relative to each other, until the blocking pin 22 gets to the desired hole 24. The blocking pin 22, during the mutual sliding of the tubular profiles 16, 18, can pass several holes 24 whose shape and/or orientation does not correspond to the unique position and/or orientation of the blocking pin. Through the combination of a unique hole shape orientation and/or a unique transverse position of the holes 24 with a unique position and/or rotational orientation of the blocking pin 22, it is possible to select which hole 24 of the series of holes 24 the blocking pin 22 must extend into. So, for setting the trailer to the desired length, the user needs to come out of the cabin only once, to bring the blocking pin in the release position and in a unique position and/or rotational orientation associated with the desired hole. It is to be noted that the invention also comprises an embodiment (not shown) where bringing the blocking pin in the release position and in the desired unique position and/or rotational orientation is done from the cabin, for example with a pneumatically or electrically energized adjusting mechanism.

A first possibility of ensuring that the blocking pin 22 can only extend into one hole 24 is to obtain a unique association between a position of the blocking pin 22 and a transverse/height position of a hole 24 in the second tubular profile 18 with respect to the longitudinal central axis 26. A unique position of the blocking pin 22 with respect to the first tubular profile 16 in a direction transverse to the axial direction of the blocking pin 22 can be obtained by making the blocking pin 22 displaceable in that direction. A second possibility of ensuring that the blocking pin 22 can only extend into one hole 24 is to obtain a unique association between a rotational orientation of the blocking pin 22 and a unique hole shape orientation of a hole 24 of the series of holes 24. A unique hole shape orientation of each hole in the series of holes 24 can be obtained by giving the holes 24 a hole shape that is non-circularly symmetrical, and for each hole 24 to provide this non-circularly symmetrical hole shape in a different rotational orientation in the second tubular profile 18. An example of a non-circularly symmetrical hole shape is a non-equilateral triangle or a trapezium. The unique association is then effected by giving the end of the blocking pin 22 a shape that is a precise fit for the hole shape of each hole 24 of the series of holes 24 and in that the rotational orientation of the blocking pin 22 in each case only fits the rotational orientation of one hole 24 from the series of holes. Obviously, it is possible to use a combination of the two possibilities, for example, an implementation where the blocking pin 22 is both rotatable and is displaceable in transverse/height direction relative to the longitudinal central axis.

By bringing the blocking pin 22 in a unique position and/or rotational orientation, the user selects which hole 24 the blocking pin 22 must move into, and thereby the user selects the desired length of the trailer 10. The extension assembly 14 can be provided with indicia indicating the length of the trailer 10 corresponding with a respective unique position and/or rotational orientation. On the basis of those indicia, the user can easily select the desired length. The blocking pin will not extend into any hole 24 until it arrives at the hole 24 that is associated with its unique position and/or rotational orientation. By setting the blocking pin 22, it is not possible anymore for it to extend into any other hole 24 not desired. The blocking pin 22 will therefore not fix the trailer 10 in an undesired length.

In an embodiment, the position and/or rotational orientation of the blocking pin 22 is defined by the rotational orientation of the blocking pin 22 around a rotation axis 30 which extends in the axial direction of the blocking pin 22, and with the end 28 of the blocking pin 22 being eccentric with respect to the rotation axis 30.

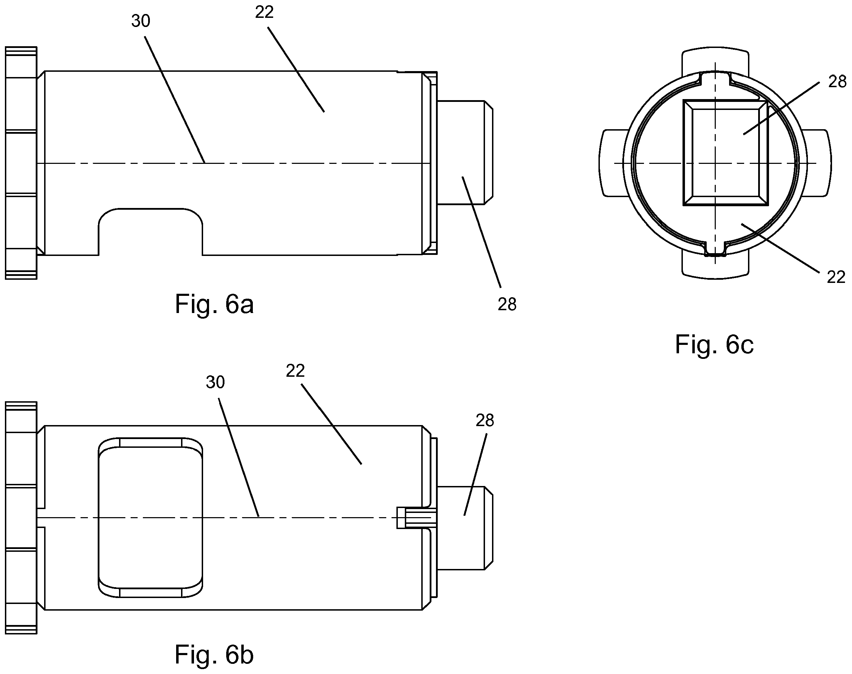

Due to the end 28 of the blocking pin 22 being eccentric with respect to the rotation axis 30, upon rotation of the blocking pin 22, the position of the end 28 in a direction transverse to the axial direction of the blocking pin 22 will change. An example of such a blocking pin 22 is shown in Figures 6a-6c, where the end 28 has a rectangular shape. Due to this end 28 being arranged eccentrically with respect to the rotation axis 30, the position of the end 28 varies upon rotation of the blocking pin 22. Upon a rotation of the blocking pin 22 of 180°, the associated hole shape orientation, that is, the rotational position (attitude) of the hole, remains equal. However, due to the end being eccentric with respect to the rotation axis 30, the transverse position of the associated hole 24 is not equal. Therefore, there is always a unique association involved between a position and/or rotational orientation of the blocking pin 22 and the hole shape orientation and/or transverse position of a hole 24.

In an embodiment, the blocking mechanism 20 is provided with a housing 32 which is fixedly connected with the first tubular profile 16. The blocking pin 22 is received in the housing 32 and, within it, is movable in the axial direction and is rotatable around the rotation axis 30.

By receiving the blocking pin 22 in a housing 32, the movement of the blocking pin 22 can be limited to the desired, described movements.

In an embodiment, the blocking mechanism 20 includes a biasing unit 34 which, in operation, forces the blocking pin 22 in axial direction to the second tubular profile 18. The biasing unit 34 can be, for example, a spring which forces the blocking pin 22 to the second tubular profile 18.

The biasing unit 34 ensures that the blocking pin 22 is continuously forced to the second tubular profile 18. It also ensures that if the blocking pin 22 gets to a hole 24 that is associated with the unique position and/or rotational orientation of the blocking pin 22, the blocking pin 22 is brought into the hole 24.

In an embodiment, the blocking mechanism 20 can comprise a blocking energization 36, which, in operation, displaces the blocking pin 22 in the axial direction. The blocking energization 36 can be, for example, a pneumatic piston-cylinder assembly.

Optionally, this embodiment can be combined with the embodiment that includes the biasing unit 34. The blocking energization then needs to be configured only to move the blocking pin 22, against the action of the biasing unit 34, away from the second tubular profile 18 to move it from the locking position to the release position.

In an embodiment, the trailer 10 is further provided with an undercarriage 38. The undercarriage 38 can consist of one or more axles extending transversely to the driving direction, provided with wheels. The number of axles and wheels will depend on the maximum weight to be borne by the trailer 10.

In an embodiment, the trailer 10 is further provided with a kingpin 40 for attaching the trailer 10 to a tractive vehicle. The kingpin 40 may be placed in a coupling dish of the tractive vehicle to couple the trailer 10 to the tractive vehicle.

In an embodiment, the trailer 10 is further provided with a retaining mechanism 42. The retaining mechanism 42 includes a retaining pin 44 which is connected with the first tubular profile 16, and a number of retaining holes 48 provided in the second tubular profile 18. Further, the retaining mechanism 42 comprises a retaining energization 46 with the aid of which the retaining pin 44 is movable between a release position in which the retaining pin 44 does not extend into one of the retaining holes 48 and a locking position in which the retaining pin 44 extends into one of the retaining holes 48. The blocking mechanism 20 and the retaining mechanism 42 are operatively connected by a tracking circuit which, in operation, energizes the retaining energization 46 and thereby moves the retaining pin 44 into the locking position, after the blocking pin 22 has been brought into the locking position. The retaining energization 46 can comprise a pneumatic piston-cylinder assembly.

The retaining pin 44 provides for extra safety of the trailer 10. When the blocking pin 22 extends into a hole 24 in the second tubular profile 18, it ensures that the two tubular profiles 16, 18 cannot slide relative to each other. To be able to guarantee the safety, the tubular profiles 16, 18 need to remain fixed during travel of the trailer 10 on the public road. Depending on the load of the trailer 10, forces on the blocking pin 22, especially when the trailer 10 is accelerated or slowed down, can become very large. To enhance safety still further, the tubular profiles 16, 18 may be fixed not only by the blocking pin 22, but by the retaining pin 44 as well. The tracking circuit ensures that the retaining pin 44 does not block the tubular profiles 16, 18 until after the blocking pin 22 has been brought into the locking position.

In an embodiment, the at least one extension assembly 14 comprises two extension assemblies 14 which are arranged one after the other in length direction. By placing two extension assemblies 14 one after the other, the trailer can be moved apart in three parts.

In an embodiment, the extendible chassis 12 is extendible in three parts. The extendibility is provided by the two extension assemblies 14. The blocking mechanism 20 of a first of the two extension assemblies 14 and the blocking mechanism 20 of a second of the two extension assemblies 14 are operatively connected by a tracking circuit which, in operation, energizes the blocking energization 36 of the first extension assembly 14 and thereby keeps the blocking pin 22 of the first extension assembly 14 in the release position for as long as the blocking pin 22 of the second extension assembly 14 has not been moved into the locking position.

The effect is that upon driving the tractive vehicle back and forth when setting the length of the trailer, first the second extension assembly locks and thereafter the first extension assembly locks. This effect can be achieved in the example shown in the figures by having a tubular profile arranged on a rear part of the extendible chassis 12 continue in a tubular profile that has been arranged on a front part of the extendible chassis 12. Both of the above-mentioned profiles can be tubular profiles 16, 18 of one of the extension assemblies 14. The two above-mentioned profiles can be provided with an air bellows/spring system that has a fixation position, in which the two profiles are fixed with respect to each other, and a release position, where the two profiles are slidable relative to each other. The fixation of the profiles with respect to each other may be effected, for example, by means of friction. When the front part of the extendible chassis 12 is slid when the air bellows/spring system is in the fixation position, the rear part of the extendible chassis 12 slides along. When the rear part has been blocked at the proper length, the air bellows/spring system can be put in the release position and the front part can be blocked at the proper length.

In an embodiment, the trailer 10 is configured for conveying containers, more particularly containers of different lengths. For this, the trailer may be provided with one or more twistlocks to secure these containers.

The invention further provides a method for adjusting in length a trailer with an extendible chassis according to the invention. More particularly, the invention provides a method comprising: providing a trailer 10 according to the invention, providing a tractive vehicle coupled to the trailer 10, setting the blocking pin 22 of the at least one extension assembly 14 in a desired unique position and/or rotational orientation, and displacing the tractive vehicle until the blocking pin 22 of each of the at least one extension assembly 14 is in the locking position.

### KEY TO REFERENCE NUMERALS

- 10 -: trailer
- 12 -: chassis
- 14 -: extension assembly
- 16 -: first tubular profile
- 18 -: second tubular profile
- 20 -: blocking mechanism
- 22 -: blocking pin
- 24 -: hole
- 26 -: longitudinal central axis
- 28 -: end (of the blocking pin)
- 30 -: rotation axis
- 32 -: housing
- 34 -: biasing unit
- 36 -: blocking energization
- 38 -: undercarriage
- 40 -: kingpin
- 42 -: retaining mechanism
- 44 -: retaining pin
- 46 -: retaining energization
- 48 -: retaining holes

## Claims

1. A trailer (10), comprising an extendible chassis (12), wherein the extendibility is provided by at least one extension assembly (14) including a first (16) and a second (18) tubular profile which are telescopically slidable relative to each other in a length direction, wherein the extension assembly (14) includes a blocking mechanism (20) for blocking the first (16) and the second tubular profile (18) relative to each other, wherein the blocking mechanism (20) comprises a blocking pin (22) which is connected with the first tubular profile (16) so as to be adjustable in an axial direction of the blocking pin (22), transversely to the length direction and thereby is movable between a locking position and a release position, while the second tubular profile (18) is provided with a series of holes (24) at different length positions with respect to a longitudinal central axis (26) of the second tubular profile (18), wherein each hole (24) of the series of holes (24) in the second tubular profile (18) has a unique hole shape orientation and/or has a unique transverse position with respect to the longitudinal central axis (26) of the second tubular profile (18), **characterised by** a position and/or rotational orientation of the blocking pin (22) with respect to the first tubular profile (16) being adjustable in a direction transverse to the axial direction of the blocking pin (22), such that the blocking pin (22) for each hole (24) of the series of holes (24) is bringable into a unique position and/or rotational orientation associated with that hole (24), in which the blocking pin (22) is displaceable in axial direction to the locking position so that an end (28) of the blocking pin (22) can extend into the relevant hole (24) for blocking the telescopic slideability of the first tubular profile (16) relative to the second tubular profile (18) and wherein the end (28) of the blocking pin (22) in that relevant unique position and/or rotational orientation is not bringable into the other holes (24) of the series of holes (24).

2. The trailer according to claim 1, wherein the position and/or rotational orientation of the blocking pin (22) is defined by the rotational orientation of the blocking pin (22) around a rotation axis (30) which extends in the axial direction of the blocking pin (22), and wherein the end (28) of the blocking pin (22) is eccentric with respect to the rotation axis (30).

3. The trailer according to claim 2, wherein the blocking mechanism (20) is provided with a housing (32) which is fixedly connected with the first tubular profile (16), wherein the blocking pin (22) is received in the housing (32) and, within it, is movable in the axial direction and is rotatable around the rotation axis (30).

4. The trailer according to any one of the preceding claims, wherein the blocking mechanism (20) is provided with a biasing unit (34) which, in operation, forces the blocking pin (22) in axial direction to the second tubular profile (18).

5. The trailer according to claim 4, wherein the biasing unit (34) comprises a spring, which forces the blocking pin (22) to the second tubular profile (18).

6. The trailer according to any one of claims 1-5, wherein the blocking mechanism (20) further comprises a blocking energization (36), which, in operation, displaces the blocking pin (22) in the axial direction.

7. The trailer according to claim 6, wherein the blocking energization (36) comprises a pneumatic piston-cylinder assembly.

8. The trailer according to any one of the preceding claims further provided with an undercarriage (38).

9. The trailer according to any one of the preceding claims further provided with a kingpin (40) for attaching the trailer (10) to a tractive vehicle.

10. The trailer according to any one of the preceding claims also provided with a retaining mechanism (42), wherein the retaining mechanism (42) is provided with:
- a retaining pin (44) which is connected with the first tubular profile (16);
- a number of retaining holes (48) in the second tubular profile (18) and
- a retaining energization (46) with the aid of which the retaining pin (44) is movable between a release position in which the retaining pin (44) does not extend into one of the retaining holes (48) and a locking position in which the retaining pin (44) extends into one of said retaining holes (48),
wherein the blocking mechanism (20) and the retaining mechanism (42) are operatively connected by a tracking circuit which, in operation, energizes the retaining energization (46) and thereby moves the retaining pin (44) into the locking position, after the blocking pin (22) has been brought into the locking position.

11. The trailer according to claim 10, wherein the retaining energization (46) comprises a pneumatic piston-cylinder assembly.

12. The trailer according to any one of the preceding claims, wherein the at least one extension assembly (14) comprises two extension assemblies (14) which are provided one after the other in the length direction.

13. The trailer according to claims 6 and 12, wherein the extendible chassis (12) is extendible in three parts, wherein the extendibility is provided by the two extension assemblies (14), wherein the blocking mechanism (20) of a first of the two extension assemblies (14) and the blocking mechanism (20) of a second of the two extension assemblies (14) are operatively connected by a tracking circuit which, in operation, energizes the blocking energization (36) of the first extension assembly (14) and thereby keeps the blocking pin (22) of the first extension assembly (14) in the release position for so long as the blocking pin (22) of the second extension assembly (14) has not been moved into the locking position.

14. The trailer according to any one of the preceding claims, wherein the trailer is configured for conveying containers, more particularly containers of different lengths.

15. The method for adjusting in length a trailer with an extendible chassis, the method comprising
- providing a trailer (10) according to any one of the preceding claims;
- providing a tractive vehicle coupled to the trailer (10);
- setting the blocking pin (22) of the at least one extension assembly (14) in the desired unique position and/or rotational orientation; and
- displacing the tractive vehicle until the blocking pin (22) of each of the at least one extension assembly (14) is in the locking position.

## Patentansprüche

1. Anhänger (10) mit einem ausziehbaren Fahrgestell (12), wobei die Ausziehbarkeit durch wenigstens eine Verlängerungsbaugruppe (14) bereitgestellt wird, die ein erstes (16) und ein zweites (18) rohrförmiges Profil einschließt, die relativ zueinander in einer Längsrichtung teleskopartig verschiebbar sind, wobei die Verlängerungsbaugruppe (14) einen Blockiermechanismus (20) zum Blockieren des ersten (16) und des zweiten rohrförmigen Profils (18) relativ zueinander einschließt, wobei der Blockiermechanismus (20) einen Blockierstift (22) umfasst, der mit dem ersten rohrförmigen Profil (16) verbunden ist, so dass er in einer axialen Richtung des Blockierstifts (22) quer zur Längsrichtung einstellbar ist und dadurch zwischen einer Verriegelungsposition und einer Freigabeposition beweglich ist, während das zweite rohrförmige Profil (18) mit einer Reihe von Löchern (24) an unterschiedlichen Längenpositionen in Bezug auf eine Längsmittelachse (26) des zweiten rohrförmigen Profils (18) versehen ist, wobei jedes Loch (24) der Reihe von Löchern (24) in dem zweiten rohrförmigen Profil (18) eine eindeutige Lochformausrichtung hat und/oder eine eindeutige Querposition in Bezug auf die Längsmittelachse (26) des zweiten rohrförmigen Profils (18) hat, **dadurch gekennzeichnet, dass** eine Position und/oder Drehausrichtung des Blockierstifts (22) in Bezug auf das erste rohrförmige Profil (16) in einer Richtung quer zur axialen Richtung des Blockierstifts (22) einstellbar ist, so dass der Blockierstift (22) für jedes Loch (24) der Reihe von Löchern (24) in eine eindeutige Position und/oder Drehausrichtung gebracht werden kann, die mit diesem Loch (24) verbunden ist, wobei der Blockierstift (22) in axialer Richtung in die Verriegelungsposition verschiebbar ist, so dass sich ein Ende (28) des Blockierstifts (22) in das betreffende Loch (24) erstrecken kann, um die teleskopische Verschiebbarkeit des ersten rohrförmigen Profils (16) relativ zu dem zweiten rohrförmigen Profil (18) zu blockieren, und wobei das Ende (28) des Blockierstifts (22) in dieser betreffenden eindeutigen Position und/oder Drehausrichtung nicht in die anderen Löcher (24) der Reihe von Löchern (24) gebracht werden kann.

2. Anhänger nach Anspruch 1, wobei die Position und/oder Drehrichtung des Blockierstifts (22) durch die Drehausrichtung des Blockierstifts (22) um eine Drehachse (30) definiert ist, die sich in axialer Richtung des Blockierstifts (22) erstreckt, und wobei das Ende (28) des Blockierstifts (22) in Bezug auf die Drehachse (30) exzentrisch ist.

3. Anhänger nach Anspruch 2, wobei der Blockiermechanismus (20) mit einem Gehäuse (32) versehen ist, das fest mit dem ersten rohrförmigen Profil (16) verbunden ist, wobei der Blockierstift (22) im Gehäuse (32) aufgenommen und darin in axialer Richtung beweglich und um die Drehachse (30) drehbar ist.

4. Anhänger nach einem der vorhergehenden Ansprüche, wobei der Blockiermechanismus (20) mit einer Vorspanneinheit (34) versehen ist, die im Betrieb den Blockierstift (22) in axialer Richtung an das zweite rohrförmige Profil (18) drückt.

5. Anhänger nach Anspruch 4, wobei die Vorspanneinheit (34) eine Feder umfasst, die den Blockierstift (22) an das zweite rohrförmige Profil (18) drückt.

6. Anhänger nach einem der Ansprüche 1 bis 5, wobei der Blockiermechanismus (20) ferner eine blockierende Bestromung (36) umfasst, die im Betrieb den Blockierstift (22) in axialer Richtung verschiebt.

7. Anhänger nach Anspruch 6, wobei die blockierende Bestromung (36) eine pneumatische Kolben-Zylinder-Baugruppe umfasst.

8. Anhänger nach einem der vorhergehenden Ansprüche, der ferner mit einem Fahrgestell (38) versehen ist.

9. Anhänger nach einem der vorhergehenden Ansprüche, der ferner mit einem Königszapfen (40) zur Befestigung des Anhängers (10) an einem Zugfahrzeug versehen ist.

10. Anhänger nach einem der vorhergehenden Ansprüche, der auch mit einem Haltemechanismus (42) versehen ist, wobei der Haltemechanismus (42) versehen ist mit:
- einem Haltestift (44), der mit dem ersten rohrförmigen Profil (16) verbunden ist;
- einer Anzahl von Haltelöchern (48) in dem zweiten rohrförmigen Profil (18) und
- einer haltenden Bestromung (46), mit deren Hilfe der Haltestift (44) zwischen einer Freigabeposition, in der sich der Haltestift (44) nicht in eines der Haltelöcher (48) erstreckt, und einer Verriegelungsposition, in der sich der Haltestift (44) in eines der Haltelöcher (48) erstreckt, beweglich ist,
wobei der Blockiermechanismus (20) und der Haltemechanismus (42) durch eine Nachführschaltung betriebsmäßig verbunden sind, die im Betrieb die haltende Bestromung (46) bestromt und dadurch den Haltestift (44) in die Verriegelungsposition bewegt, nachdem der Blockierstift (22) in die Verriegelungsposition gebracht worden ist.

11. Anhänger nach Anspruch 10, wobei die haltende Bestromung (46) eine pneumatische Kolben-Zylinder-Baugruppe umfasst.

12. Anhänger nach einem der vorhergehenden Ansprüche, wobei die wenigstens eine Verlängerungsbaugruppe (14) zwei in Längsrichtung hintereinander angeordnete Verlängerungsbaugruppen (14) umfasst.

13. Anhänger nach einem der Ansprüche 6 und 12, wobei das ausziehbare Fahrgestell (12) in drei Teile ausziehbar ist, wobei die Ausziehbarkeit durch die beiden Verlängerungsbaugruppen (14) bereitgestellt wird, wobei der Blockiermechanismus (20) einer ersten der beiden Verlängerungsbaugruppen (14) und der Blockiermechanismus (20) einer zweiten der beiden Verlängerungsbaugruppen (14) durch eine Nachführschaltung betriebsmäßig verbunden sind, die im Betrieb die blockierende Bestromung (36) der ersten Verlängerungsbaugruppe (14) bestromt und dadurch den Blockierstift (22) der ersten Verlängerungsbaugruppe (14) so lange in der Freigabeposition hält, wie der Blockierstift (22) der zweiten Verlängerungsbaugruppe (14) nicht in die Verriegelungsposition bewegt wurde.

14. Anhänger nach einem der vorhergehenden Ansprüche, wobei der Anhänger zum Transport von Behältern, insbesondere von Behältern unterschiedlicher Länge, eingerichtet ist.

15. Verfahren zur Verstellung der Länge eines Anhängers mit einem ausziehbaren Fahrgestell, wobei das Verfahren umfasst
- Bereitstellen eines Anhängers (10) nach einem der vorhergehenden Ansprüche;
- Bereitstellen eines an den Anhänger (10) gekoppelten Zugfahrzeugs;
- Einstellen des Blockierstifts (22) der wenigstens einen Verlängerungsbaugruppe (14) in die gewünschte eindeutige Position und/oder Drehausrichtung; und
- Verschieben des Zugfahrzeugs, bis sich der Blockierstift (22) jeder der wenigstens einen Verlängerungsbaugruppe (14) in der Verriegelungsposition befindet.

## Revendications

1. Une remorque (10), comprenant un châssis extensible (12,), dans lequel l'extensibilité est assurée par au moins un assemblage formant rallonge (14) comprenant un premier (16) et un second (18) profilé tubulaire coulissant l'un par rapport à l'autre de manière télescopique selon la direction de la longueur, dans laquelle l'assemblage formant rallonge (14) inclut un mécanisme de blocage (20) pour bloquer le premier (16) et le second profilé tubulaire (18) l'un par rapport à l'autre, dans lequel le mécanisme de blocage (20) comprend une goupille de blocage (22) qui est connectée au premier profilé tubulaire (16) pour être ajustable dans une direction axiale de la goupille de blocage (22), transversalement par rapport à la direction de la longueur et est ainsi déplaçable entre une position de verrouillage et une position de libération, tandis que le second profilé tubulaire (18) est muni d'une série de trous (24) sur différentes positions de sa longueur par rapport à un axe longitudinal central (26) du second profilé tubulaire (18), dans laquelle chaque trou (24) des séries de trous (24) dans le second profilé tubulaire (18) présente une orientation unique de la forme du trou et/ou présente une position transversale unique par rapport à l'axe central longitudinal (26) du second profilé tubulaire (18), cette remorque étant **caractérisée par** une position et/ou orientation par rotation de la goupille de blocage (22) par rapport au premier profilé tubulaire (16) qui est réglable dans une direction transversale en direction axiale de la goupille de blocage (22), de telle sorte que la goupille de blocage (22) de chaque trou (24) de la série de trous (24) peut être amenée dans une position et/ou une orientation par rotation uniques associée à ce trou (24), dans laquelle la goupille de blocage (22) est déplaçable dans la direction axiale vers la position de verrouillage de sorte qu'une extrémité (28) de la goupille de blocage (22) peut s'enfoncer dans le trou pertinent (24) aux fins de bloquer la glissabilité télescopique du premier profilé tubulaire (16) par rapport au second profilé tubulaire (18) et dans lequel l'extrémité (28) de la goupille de blocage (22) dans cette position et/ou orientation par rotation uniques pertinente ne peut pénétrer dans les autres trous (24) de la série de trous (24).

2. La remorque selon la revendication 1, dans laquelle la position et/ou l'orientation par rotation de la goupille de blocage (22) sont définies par l'orientation par rotation de la goupille de blocage (22) autour d'un axe de rotation (30) qui s'étend dans la direction axiale de la goupille de blocage (22), et dans laquelle l'extrémité (28) de la goupille de blocage (22) est excentrique par rapport à l'axe de rotation (30).

3. La remorque selon la revendication 2, dans laquelle le mécanisme de blocage (20) est muni d'un boîtier (32) qui est connecté de façon fixe au premier profilé tubulaire (16), dans laquelle la goupille de blocage (22) est reçue dans le boîtier (32) et, à l'intérieur de celui-ci, est mobile dans la direction axiale et susceptible de rotation autour de l'axe de rotation (30).

4. La remorque selon l'une quelconque des revendications précédentes, dans laquelle le mécanisme de blocage (20) est muni d'une unité de sollicitation (34) qui, en fonctionnement, force la goupille de blocage (22) dans le sens axial vers le second profilé tubulaire (18).

5. La remorque selon la revendication 4, dans laquelle l'unité de sollicitation (34) comprend un ressort, qui force la goupille de blocage (22) vers le second profilé tubulaire (18).

6. La remorque selon l'une quelconque des revendications 1 à 5, dans laquelle le mécanisme de blocage (20) comprend en outre un organe d'actionnement de blocage (36), qui, en fonctionnement, déplace la goupille de blocage (22) selon la direction axiale.

7. La remorque selon la revendication 6, dans laquelle l'organe d'actionnement de blocage (36) comprend un ensemble piston-cylindre pneumatique.

8. La remorque selon l'une quelconque des revendications précédentes était en outre munie d'un train de roulement (38).

9. La remorque selon l'une quelconque des revendications précédentes était en outre munie d'un pivot d'attelage (40) pour attacher la remorque (10) à un véhicule de traction.

10. La remorque selon l'une quelconque des revendications précédentes est également munie d'un mécanisme de retenue (42), lequel mécanisme de retenue (42) est pourvu:
d'une goupille de retenue (44) connectée au premier profilé tubulaire (16);
d'un certain nombre de trous de retenue (48) dans le second profilé tubulaire (18) et
de moyens de formant actionneur de retenue (46) à l'aide desquels la goupille de retenue (44) est mobile entre une position de dégagement dans laquelle la goupille de retenue (44) ne pénètre pas dans l'un des trous de retenue (48) et une position de verrouillage dans laquelle la goupille de retenue (44) s'enfonce dans l'un desdits trous de retenue (48),
dans laquelle le mécanisme de blocage (20) et le mécanisme de retenue (42) sont connectés de manière opérationnelle par un circuit de suivi qui, en fonctionnement, alimente les moyens formant actionneur de retenue (46) et conséquemment déplace ainsi la goupille de retenue (44) à la position de verrouillage, après que la goupille de blocage (22) a été mise en position de verrouillage.

11. La remorque selon la revendication 10, dans laquelle les moyens formant actionneur de retenue (46) comprennent un ensemble piston-cylindre pneumatique.

12. La remorque selon l'une quelconque des revendications précédentes, dans laquelle au moins un assemblage formant rallonge (14) comprend deux assemblages formant rallonge (14) qui sont fournis l'un après l'autre dans le sens de la longueur.

13. La remorque selon les revendications 6 et 12, dans laquelle le châssis extensible (12) est extensible en trois parties, dans laquelle l'extensibilité est fournie par les deux assemblages d'extension (14), dans lesquels le mécanisme de blocage (20) d'un premier des deux assemblages d'extension (14) et le mécanisme de blocage (20) d'un second des deux assemblages formant rallonge (14) sont reliés de manière opératoire par un circuit de suivi qui, en fonctionnement, alimente l'organe d'actionnement de blocage (36) du premier assemblage formant rallonge (14) et ainsi maintient la goupille de blocage (22) du premier assemblage formant rallonge (14) en position de libération pour aussi longtemps que la goupille de blocage (22) du second assemblage formant rallonge (14) n'a pas été déplacée en position de verrouillage.

14. La remorque selon l'une quelconque des revendications précédentes, dans laquelle la remorque est configurée pour transporter des conteneurs, plus particulièrement des containers de longueurs différentes.

15. Procédé de réglage en longueur d'une remorque munie d'un châssis extensible, le procédé comprenant les étapes consistant à:
fournir une remorque (10) selon l'une quelconque des revendications précédentes ;
fournir un véhicule de traction attelé à la remorque (10);
régler la goupille de blocage (22) de l'au moins un assemblage formant rallonge (14) dans la position unique et/ou l'orientation par rotation souhaitée; et
déplacer le véhicule de traction jusqu'à ce que la goupille de blocage (22) de chacun parmi les au moins un assemblage formant rallonge (14) soit en position de verrouillage.
